# EUROPEAN PATENT APPLICATION

(11) **EP 0 666 428 A1**
(43) Date of publication of application: **09.08.1995**
(21) Application number: 95300602.0
(22) Date of filing: 31.01.1995
(51) Int. Cl.: F16B 37/08, F16L 3/237

(54) **Stud fastener**

(30) Priority: 02.02.1994 JP 11222/94
(71) Applicant: EMHART INC., Newark, Delaware 19711 (US)
(72) Inventor: Kanie, Hideki, Higashiwaki, Toyohashi-Shi Aichi-Ken (JP)
(74) Representative: Stagg, Diana Christine

(57) **Abstract**

In order to provide firm engagement of a stud with a stud fastener for use in mounting pipes, it is desirable that a stud engagement portion of the fastener be fully pressed onto the stud. In the present invention the stud fastener (1) has a stud engagement portion (4) formed with a stud receiving hole (10) for receiving the stud so that the end of the stud extends from the hole, and an elongated resilient piece (14) extends to close the hole at a stud outlet portion of the stud receiving hole, and that the resilient piece is pressed out by the stud end projecting from the outlet of the hole so that the resilient piece is raised up from the closed position of the stud receiving hole.

## Description

The present invention relates to a stud fastener for attaching an attachment component to a member to which an externally threaded or grooved stud is fixed by engagement of the fastener with the stud, and particularly to a stud fastener used preferably for holding elongated members such as fuel pipes or brake pipes of an automobile on a panel such as a vehicle body.

There is a well known stud fastener used for attaching an attachment component to a member to which a threaded stud or the like is fixed by engagement of the fastener with the stud. In this fastener, since no perforation is required on a panel, a stud fastener is widely used to hold, for example, a fuel pipe or a brake pipe on a panel such as a vehicle body. Such a typical stud fastener comprises a stud engagement portion having a stud receiving hole formed therein to receive a stud of which a first end extends from the hole, and a pipe holder extending crossways integrally from the stud engagement portion to hold pipes as pressed therein. The pipes are held by the pipe holder and the stud engagement portion is pressed to receive the threaded stud fixed to a panel until the end of the stud projects from the stud engagement portion. Thus, the stud fastener is brought into engagement with the stud to thereby mount the pipes on the panel.

In such a stud fastener, firm engagement with the stud is obtained if the stud engagement portion is fully pressed onto the stud. If not, however, it results in defective mounting of pipes. Therefore, it is desired that an operator can easily judge that the stud engagement portion has been fully pressed onto the stud.

Accordingly, the present invention aims to provide a stud fastener which enables the operator to confirm full pressing onto the stud.

In order to obtain the above-described advantage, according to the present invention, there is provided a stud fastener for attaching an attachment component to the member to which an externally threaded or grooved stud is fixed by engagement of the fastener with the stud, characterised in that the stud fastener has a stud engagement portion formed with a stud receiving hole for receiving the stud so that the end of the stud extends from the hole, and an elongated resilient piece extends to close the hole at a stud outlet portion of the stud receiving hole, and in that the resilient piece is pressed out by the stud end projecting from the outlet of the hole so that the resilient piece is raised up from the closed position of the stud receiving hole. Thus, it can be measured by taking a look at the raised posture of the resilient piece how the stud engagement portion has been pressed onto the stud, and it is possible to make sure that the stud has been pressed up to a sufficient position.

Preferably, according to the present invention, a pair of resilient pieces are formed to face each other diametrically with respect to the stud receiving hole so that the position of the stud in the stud receiving hole can be known by taking a look at the raised posture of each resilient piece. The pair of the resilient pieces may preferably be connected to each other via a breakable thin portion which can be broken by pressing the end of the stud. In that case, the resilient pieces can be raised up only by the projection of the stud. As the resilient pieces are never raised except when pressed to the stud, the operator can further accurately know the degree of pressing the fastener onto the stud. The stud fastener can preferably be provided with a pipe holder extending crossways integrally from the stud engagement portion to hold pipes as pressed therein so as to mount the pipes on the panel. The stud receiving hole may preferably be formed as an elongated hole having a major axis of substantially twice as long as the diameter of the stud to increase an acceptable range of the stud attachment positions and the resilient pieces can also extend in the direction of the major axis so that the position of the stud can be known.

The invention will now be described, by way of example only, with reference to the accompanying drawings, in which:
Figure 1 is a front view of a stud fastener of a first embodiment according to the present invention under the condition before the fastener is attached to a stud;
Figure 2 is a bottom view of the stud fastener of Figure 1;
Figure 3 is an enlarged view of the stud receiving hole shown in Figure 2;
Figure 4 is a sectional view taken along the line A-A of Figure 1;
Figure 5 is a similar view to Figure 4, showing that the stud fastener has been attached to the stud;
Figure 6 is a similar view to Figure 4, showing the stud one-sided in the stud receiving hole; and
Figure 7 is a sectional view of a second embodiment stud fastener according to the present invention.

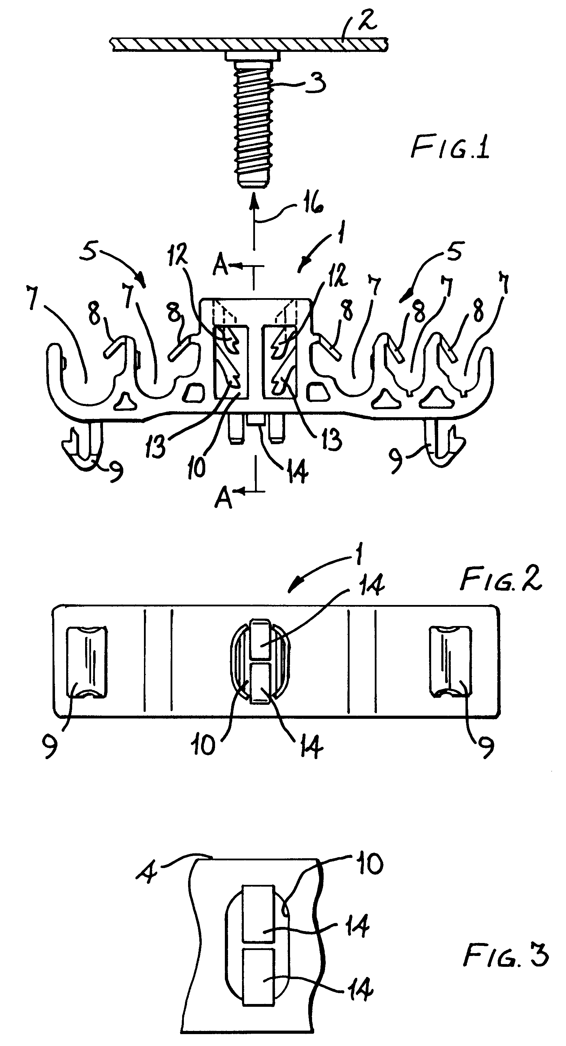

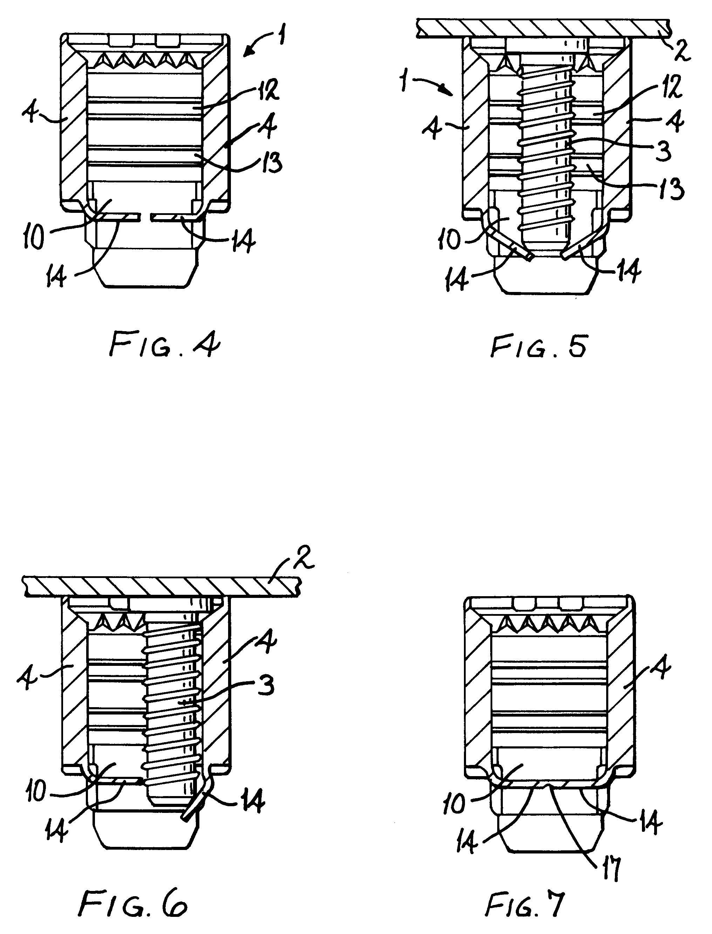

The present invention is described further by way of embodiments, with reference to accompanying drawings. Figures 1 through 6 show a first embodiment stud fastener 1 according to the present invention. The stud fastener 1 is described in the following, referring to Figures 1 through 6. The stud fastener 1 according to the present invention is made in a one-piece of plastic and comprises a stud engagement portion 4 having a stud receiving hole to receive a threaded stud 3 as fixed to a panel 2, and pipe holders 5, 5 extending crossways integrally from the stud engagement portion to hold pipes when the pipes are pressed into their openings.

The pipe holders 5, 5 on both sides of the stud engagement portion 4 are composed of substantially U-shaped troughs 7 opening upwardly, and resilient wings 8 extending from the top diagonally toward the bottom to prevent the pressed pipes from getting off. The pipe holders 5 are formed with troughs of different sizes to support pipes with different diameters. On the rear side (lower side in Figure 1) of the pipe holders 5, 5, a pair of engagement pawls 9 are formed for engagement with a protector which protects the pipes and the stud fastener 1.

The stud engagement portion 4 is formed with a stud receiving hole 10 to receive the threaded stud. The stud receiving hole 10 is formed as an elongated hole which is longer in the direction parallel to the longitudinal direction (vertical direction in Figure 2) of the pipes held by the pipe holders 5. In its inlet portion (an upper portion in Figure 1), first engagement pawls 12 are formed to engage with threads of the received stud. The first engagement pawl 12 is made of a plate extending in parallel with the major axis of the stud receiving hole 10. A pair of the plates are arranged to face each other in the stud receiving space as the centre of the stud receiving hole 10. In the stud receiving hole 10, a pair of second engagement pawls 13 is formed below the first engagement pawls 12 to reinforce the engagement with the stud. As shown in Figure 1, two or more engagement steps can be made in the end of the engagement pawl to further increase the engagement force to the stud.

As shown in Figures 2 through 4, a stud outlet portion (a lower portion in Figure 1) in the stud receiving hole 10 of the stud engagement portion 4 is provided with elongated resilient pieces 14 extending to close the stud receiving hole 10. As best illustrated in Figure 4, a root portion of each of the resilient pieces is supported by the stud engagement portion 4 at the outlet portion of the stud receiving hole 10. The end of the resilient piece is terminated at the centre of the stud receiving hole 10. The resilient pieces 14 are normally positioned to close the stud receiving hole 10. When the stud projects from the outlet portion in the stud receiving hole 10, however, the resilient pieces 14 are pressed out by the end of the stud and raised up from the closed position of the stud receiving hole. By taking a look at the raised postures of the resilient pieces 14, the degree of pressing the fastener onto the stud can be known so that an operator can make sure that the stud has been fully pressed in. One resilient piece 14 can function well. As shown, a pair of resilient pieces 14 may be formed to face each other diametrically with respect to the stud receiving hole 10. In the latter case, a pair of the resilient pieces 14 are formed to face each other diametrically with respect to the stud receiving hole, and the position of the stud in the stud receiving hole 10 can be known by taking a look at the raised posture of each of the resilient pieces 14.

To mount pipes on a panel by the use of the stud fasteners 1 as described above, a plurality of pipes are pressed into the troughs 7 of the pipe holders 5 of the respective stud fasteners 1 which are placed at predetermined positions. Next, the plurality of pipes having the stud fasteners 1 at the predetermined positions are transported to a panel such as a vehicle body on which a plurality of threaded studs are fixed at predetermined positions on the panel. Figure 1 shows the relationship between one of the threaded studs 3 fixed to the panel 2 and one of the stud fasteners 1 with the pipes being conveniently omitted. Each of the stud fasteners 1 is pressed onto the corresponding stud 3 as indicated by an arrow 16 in Figure 1. This pressing operation brings the first engagement pawls 12 and the second engagement pawls 13 into engagement with the threaded stud 3. A protector (not shown in the drawing) may be conveniently attached.

This pressing operation must be carried out fully until the end of the stud 3 projects from the stud receiving hole 10. Insufficient pressing results in imperfect engagement of the stud fastener 1 with the stud 3, that is, defective mounting of the pipes. In the present invention, full pressing causes the end of the stud 3 to project from the stud receiving hole 10 so that the resilient pieces 14 closing the stud receiving hole 10 are pressed out by the stud end to raise the pieces up from the closing position of the stud receiving hole. Accordingly, the degree of pressing onto the stud can be known by taking a look at the raised postures of the resilient pieces 14. When it is found that the pressing is still insufficient, an operator can press the stud fastener further so that the stud can be fully pressed in. In the case where a pair of the resilient pieces 14 is provided as in the illustrated embodiment, the position of the stud in the stud receiving hole 10 can be known by taking a look at the raised posture of each resilient piece 14. For example, in Figure 5, the two resilient pieces 14 are raised to the same position to show that the stud 3 is positioned substantially on the centre of the receiving hole. In Figure 6, one of the resilient pieces 14 (on the right side in the drawing) is raised but the other one (on the left side in the drawing) still closes the stud receiving hole 10. This indicates that the stud 3 is one sided (to the right side) in the stud receiving hole 10. In this case, if necessary, the stud fastener 1 will be shifted so that the stud 3 is positioned on the centre of the stud receiving hole 10.

Figure 7 shows a part of a stud fastener of a second embodiment according to the present invention. In this embodiment, a pair of resilient pieces 14, 14 are connected to each other by means of a thin portion 17 which is breakable by the end of the stud being pressed. This connection of the resilient pieces to each other enables an operator to distinguish an unused stud fastener from a used one because the resilient pieces remain connected before being pressed onto the stud. If the resilient pieces are not connected, the resilient pieces may happen to be raised up from the closing position of the stud receiving hole 10 by any reason other than the fastener pressing operation onto the stud. In such a case, the degree of pressing onto the stud might be misjudged. Since the connection of the two resilient pieces cannot be broken by the projection of the stud, rising of the resilient pieces is limited by the pressing operation onto the stud. Thus, the operator can further know the degree of pressing the fastener onto the stud with confidence.

Although the stud fasteners in the above embodiments are described for use in mounting pipes they may be made for mounting other components. For example, a stud fastener can be made for mounting a decorative member held by its clamp on a vehicle body panel. Another stud fastener may be formed so that its clamp holds one panel to press the panel against another panel. In the embodiments, an externally threaded stud is used but another stud having a plurality of external grooves may be used in place of the threaded stud.

In the stud fastener according to the present invention, an elongated resilient piece extends to close the hole at a stud outlet portion of the stud receiving hole and the resilient piece is raised up from the closed position of the stud receiving hole by the stud end projecting from the hole. Thus, the degree of pressing onto the stud can be found by taking a look at the raised posture of the resilient piece. If it is determined that pressing is still insufficient, the stud can be further pressed to bring the stud to a sufficiently pressed position.

In the present invention, a pair of resilient pieces are formed to face each other diametrically with respect to the stud receiving hole so that the position of the stud in the stud receiving hole can be known by taking a look at the raised posture of each resilient piece. The pair of the resilient pieces may be connected to each other via a breakable thin portion which can be broken by pressing the end of the stud. This connection of the resilient pieces enables an operator to distinguish an unused stud fastener from a used one. As the resilient pieces can never be raised except when pressed to the stud, the operator can know with certainty the degree to which the fastener is pressed onto the stud.

## Claims

**1** A stud fastener (1) for attaching an attachment component to a member to which an externally threaded or grooved stud (3) is fixed by engagement of the fastener with the stud; characterised in that the stud fastener (1) has a stud engagement portion (4) formed with a stud receiving hole (10) for receiving the stud so that the end of the stud extends from the hole, and an elongated resilient piece extends to close the hole at a stud outlet portion of the stud receiving hole, and that the resilient piece is pressed out by the stud end projecting from the outlet of the hole so that the resilient piece is raised up from the closed position of the stud receiving hole.

**2** A stud fastener according to claim 1, characterised in that a pair of resilient pieces (14) are formed to face with each other diametrically with respect to the stud receiving hole (10).

**3** A stud fastener according to claim 2, characterised in that the pair of the resilient pieces (14) are connected to each other via a breakable thin portion (17) which can be broken by pressing the end of the stud (3).

**4** A stud fastener according to any previous claim, characterised in that the stud fastener is provided with a pipe holder (5) extending crossways integrally from the stud engagement portion (4) to hold pipes as pressed therein.

**5** A stud fastener according to any previous claim, characterised in that the stud receiving hole (10) is formed as an elongated hole having a major axis of substantially twice as long as the diameter of the stud (3), and the resilient piece or pieces (14) extend in the direction of the major axis.
